# EUROPEAN PATENT APPLICATION

(11) **EP 4 817 851 A1**
(43) Date of publication of application: **07.10.2026**
(21) Application number: 25895265.4
(22) Date of filing: 09.09.2025
(51) Int. Cl.: B29C 65/16, B29C 65/00, B29C 65/78, B29D 99/00, H01M 50/105, H01M 50/121, H01M 50/126, H01M 10/04, B29L 31/00

(54) **SECONDARY BATTERY MANUFACTURING SYSTEM AND METHOD FOR MANUFACTURING SECONDARY BATTERY**

(30) Priority: 22.11.2024 KR 20240168422
(71) Applicant: LG Energy Solution, Ltd., Seoul 07335 (KR)
(72) Inventor: RHEE, Jung Han, Daejeon 34122 (KR)
(74) Representative: Goddar, Heinz J.
(86) International application number: PCT/KR2025/014031
(87) International publication number: WO 2026/111133

(57) **Abstract**

According to exemplary embodiments, a method for manufacturing a secondary battery is provided. The manufacturing method may include: aligning a bottom pouch and a lid pouch, wherein each of the bottom pouch and the lid pouch includes a sealant layer, a protective layer, and a metal layer between the sealant layer and the protective layer, and the sealant layer of the bottom pouch is aligned to face the sealant layer of the lid pouch; and irradiating a laser beam to a first sealing part of the bottom pouch and the lid pouch. A wavelength of the laser beam may be in a range of 0.01 µm to 0.1 µm, or in a range of 0.8 µm to 1.0 µm.

## Description

This application claims the benefit of Korean Patent Application No. 10-2024-0168422, filed on November 22, 2024, the disclosure of which is incorporated herein by reference.

### [Technical Field]

The present disclosure relates to a manufacturing device for secondary batteries and a method for manufacturing secondary batteries.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has dramatically decreased, and as the driving range of BEVs (battery electric vehicles) has increased to levels comparable to fuel vehicles, the main applications of secondary batteries are expanding from mobile devices to mobility.

The trend in technological development of secondary batteries is the improvement of energy density. Here, the energy density of a secondary battery is the value obtained by dividing the maximum electrical energy that can be stored by the secondary battery by its mass or volume. Various research efforts are being conducted to develop batteries that are thin and lightweight while having high energy density.

One of the approaches to increase energy density is the use of pouch-type batteries. Pouch-type batteries can increase energy density by reducing empty space by stacking positive electrodes, separators, and negative electrodes in layers in an aluminum foil pouch.

### [Prior Art Documents]

(Patent Document 0001) Korean Patent Publication No. 10-2024-0010354

### [Summary]

### [Technical Problem]

The technical problem to be solved by the technical idea of the present disclosure is to provide a device and method for rapidly and uniformly sealing pouch-type secondary batteries.

### [Technical Solution]

According to exemplary embodiments of the present disclosure for solving the above-mentioned problem, a method for manufacturing a secondary battery is provided. The manufacturing method may include: aligning a bottom pouch and a lid pouch, wherein each of the bottom pouch and the lid pouch includes a sealant layer, a protective layer, and a metal layer between the sealant layer and the protective layer, and the sealant layer of the bottom pouch is aligned to face the sealant layer of the lid pouch; and irradiating a laser beam to a first sealing part of the bottom pouch and the lid pouch. A wavelength of the laser beam may be in a range of 0.01 µm to 0.1 µm, or in a range of 0.8 µm to 1.0 µm.

An absorption rate of the laser beam by the metal layer of the bottom pouch may be higher than an absorption rate of the laser beam by the protective layer of the bottom pouch. An absorption rate of the laser beam by the metal layer of the lid pouch may be higher than an absorption rate of the laser beam by the protective layer of the lid pouch.

In the step of irradiating the laser beam to the first sealing part, the sealant layer of the bottom pouch and the sealant layer of the lid pouch may each be melted.

In the step of irradiating the laser beam to the first sealing part, the metal layer of the bottom pouch is heated to a temperature equal to or higher than a melting temperature of the sealant layer of the bottom pouch, and the metal layer of the lid pouch may be heated to a temperature equal to or higher than a melting temperature of the sealant layer of the lid pouch.

Each of the metal layer of the bottom pouch and the metal layer of the lid pouch may include aluminum. Each of the sealant layer of the bottom pouch and the sealant layer of the lid pouch may include polypropylene.

The step of irradiating the laser beam to the first sealing part may be performed for a time period of 0.5 seconds or more and 1 second or less.

After the step of irradiating the laser beam to the first sealing part, the secondary battery manufacturing method may further include applying pressure to the first sealing part.

After the step of applying pressure to the first sealing part, the secondary battery manufacturing method may further include: injecting electrolyte into an accommodation space for an electrode assembly between the bottom pouch and the lid pouch; and sealing a second sealing part of the bottom pouch and the lid pouch.

The first sealing part may overlap with electrode leads of the electrode assembly, The second sealing part may not overlap with the electrode leads of the electrode assembly.

A melting temperature of the protective layer of the bottom pouch may be higher than a melting temperature of the sealant layer of the bottom pouch. A melting temperature of the protective layer of the lid pouch may be higher than a melting temperature of the sealant layer of the lid pouch.

According to exemplary embodiments of the present disclosure for solving the above-mentioned problem, a manufacturing device for a secondary battery is provided. The manufacturing device may include: a laser beam unit configured to irradiate a laser beam to a sealing part in which a first metal layer, a first sealant layer, a second sealant layer, and a second metal layer are sequentially stacked; and a press unit configured to apply pressure to the sealing part. A wavelength of the laser beam may be in a range of 0.01 µm to 0.1 µm, or in a range of 0.8 µm to 1.0 µm.

The laser beam unit may be configured to irradiate laser to the sealing part for a time period of 0.5 seconds or more and 1 second or less.

Each of the first metal layer and the second metal layer may include aluminum.

An absorption rate of the laser beam by the first metal layer may be greater than an absorption rate of the laser beam by the first sealant layer. An absorption rate of the laser beam by the second metal layer may be greater than an absorption rate of the laser beam by the second sealant layer.

### [Advantageous Effects]

According to exemplary embodiments of the present disclosure, by irradiating a laser beam in a wavelength range that selectively heats the metal layer to the sealing part of a pouch-type secondary battery, the pouch can be sealed rapidly and uniformly.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a pouch-type secondary battery according to exemplary embodiments.
FIG. 2 is a cross-sectional view showing a pouch-type secondary battery according to exemplary embodiments.
FIG. 3 is a cross-sectional view showing a manufacturing device for a secondary battery according to exemplary embodiments.
FIG. 4 is a cross-sectional view showing a manufacturing device for a secondary battery according to exemplary embodiments.
FIG. 5 is a flowchart showing a method for manufacturing a secondary battery according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

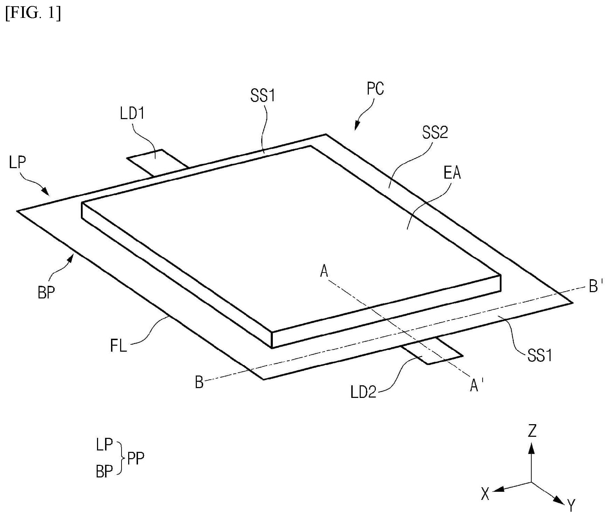

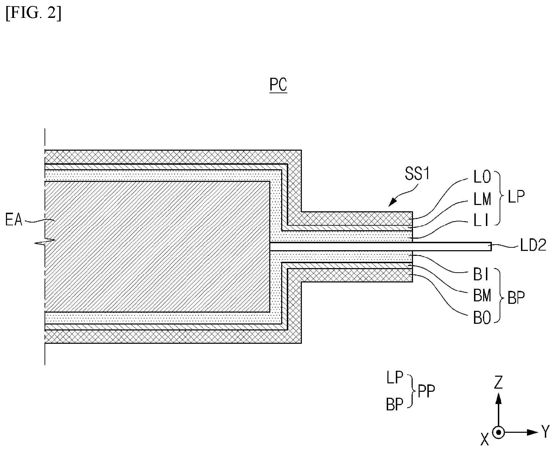

FIG. 1 is a perspective view showing a pouch-type secondary battery PC. FIG. 2 is a cross-sectional view showing a pouch-type secondary battery PC.

First, referring to FIGS. 1 and 2, the pouch-type secondary battery PC may include a pouch PP and an electrode assembly EA stored inside the pouch PP. The pouch PP may be divided into a bottom pouch BP and a lid pouch LP based on a fold line FL.

The bottom pouch BP may include a sealant layer BI, a metal layer BM, and a protective layer BO. The metal layer BM may be interposed between the sealant layer BI and the protective layer BO. The sealant layer BI may be between the electrode assembly EA and the metal layer BM.

According to exemplary embodiments, the metal layer BM may include a metal such as aluminum. The metal layer BM may be a substrate for forming the bottom pouch BP. By applying a sealant layer and a protective layer on a metal sheet and then winding it in a roll form, a pouch roll can be formed. The bottom pouch BP can be provided by separating the pouch roll according to specifications and performing a pouch forming process. The protective layer BO can provide oxygen and moisture barrier performance, mechanical robustness, and corrosion resistance to the bottom pouch BP.

The sealant layer BI may be a component for sealing the bottom pouch BP and the lid pouch LP. The sealant layer BI may include a thermoplastic material. According to exemplary embodiments, the sealant layer BI may have a melting temperature of about 120°C or more and about 190°C or less. According to exemplary embodiments, the sealant layer BI may include any one of polypropylene (PP) and polyethylene (PE). According to exemplary embodiments, the sealant layer BI may include cast polypropylene (CPP).

The protective layer BO may be an insulating layer that electrically insulates the pouch-type secondary battery PC. The protective layer BO may include an insulating material. According to exemplary embodiments, the protective layer BO may include any one of polypropylene (PP), polyamide (PA), polyethylene (PE), polyimide (PI), and polyethylene terephthalate (PET). The protective layer BO may have a melting temperature higher than the melting temperature of the sealant layer BI.

The lid pouch LP may include a sealant layer LI, a metal layer LM, and a protective layer LO. The metal layer LM may be interposed between the sealant layer LI and the protective layer LO. The sealant layer LI may be between the electrode assembly EA and the metal layer LM.

According to exemplary embodiments, the metal layer LM may include a metal such as aluminum. The metal layer LM may be a substrate for forming the lid pouch LP. By applying a sealant layer and a protective layer on a metal sheet and then winding it in a roll form, a pouch roll can be formed. The lid pouch LP can be provided by separating the pouch roll according to specifications and performing a pouch forming process. The protective layer LO can provide oxygen and moisture barrier performance, mechanical robustness, and corrosion resistance to the lid pouch LP.

The sealant layer LI may be a component for sealing the bottom pouch BP and the lid pouch LP. The sealant layer LI may include a thermoplastic material. According to exemplary embodiments, the sealant layer LI may have a melting temperature of about 120°C or more and about 190°C or less. According to exemplary embodiments, the sealant layer LI may include any one of polypropylene (PP) and polyethylene (PE). According to exemplary embodiments, the sealant layer LI may include cast polypropylene (CPP).

The protective layer LO may be an insulating layer that electrically insulates the pouch-type secondary battery PC. The protective layer LO may include an insulating material. According to exemplary embodiments, the protective layer LO may include any one of polypropylene (PP), polyamide (PA), polyethylene (PE), polyimide (PI), and polyethylene terephthalate (PET). The protective layer LO may have a melting temperature higher than the melting temperature of the sealant layer LI.

The pouch PP may include sealing parts SS1, SS2 where the sealant layer BI of the bottom pouch BP and the sealant layer LI of the lid pouch LP are sealed. Before the sealing of the pouch PP is completed, the sealing parts SS1, SS2 may refer to the portions to be sealed in each of the bottom pouch BP and the lid pouch LP. After the sealing of the pouch PP is completed, the sealing parts SS1, SS2 may refer to the sealed portions in the bottom pouch BP and the lid pouch LP.

The sealing parts SS1, SS2 may extend along the circumferential direction of the pouch PP. The sealing parts SS1, SS2 may be formed at edge portions excluding the folding portion of the pouch PP. The sealing part SS1 may be formed at edge portions on both sides where the electrode leads LD1, LD2 of the electrode assembly EA protrude. The sealing part SS1 may overlap with the electrode leads LD1, LD2 in the Z direction. The sealing part SS2 may be formed at an edge portion on one side where the electrode leads LD1, LD2 of the electrode assembly EA do not protrude. The sealing part SS2 may not overlap with the electrode leads LD1, LD2 in the Z direction.

The electrode assembly EA may include a positive electrode, a negative electrode, and a separator interposed between the positive electrode and the negative electrode. According to exemplary embodiments, the electrode assembly EA includes a plurality of positive electrodes, a plurality of negative electrodes sequentially stacked, and a plurality of separators interposed therebetween.

The positive electrode may include a positive electrode current collector and a positive electrode active material layer coated on the positive electrode current collector. According to exemplary embodiments, the positive electrode current collector may be an aluminum foil. According to exemplary embodiments, the positive electrode active material layer may include any one of LiCoO₂, LiNiO₂, LiNi₁₋ₓCoₓO₂ (0.2≤x≤0.5), LiNi_{1/3}Mn_{1/3}Co_{1/3}O₂, LiNi₀.₅Mn₀.₅O₂, LiMn₂O₄, LiMn₂₋ₓMₓO₄ (M is Al or Li, etc.), and LiFePO₄.

The negative electrode may include a negative electrode current collector and a negative electrode active material layer coated on the negative electrode current collector. According to exemplary embodiments, the negative electrode current collector may be a copper foil or nickel foil. According to exemplary embodiments, the negative electrode active material may include any one of lithium metal, graphite, coke, silicon, and tin.

The separator can physically block contact between the positive electrode and the negative electrode. According to exemplary embodiments, the separator may include any one of polyethylene, polypropylene, polyolefin, polyvinylidene fluoride (PVdF), and inorganic nanoparticles (SiO₂, TiO₂, Al₂O₃, ZrO₂, etc.).

The electrode assembly EA may include electrode leads LD1, LD2. Each of the electrode leads LD1, LD2 may be disposed at both ends of the electrode assembly EA. Each of the electrode leads LD1, LD2 may protrude outward from the pouch PP. The electrode leads LD1, LD2 can transfer electrical energy generated inside the pouch-type secondary battery PC to an external circuit. The electrode lead LD1 may be a positive electrode lead, and the electrode lead LD2 may be a negative electrode lead. According to exemplary embodiments, the electrode lead LD1 may be nickel-plated aluminum. According to exemplary embodiments, the electrode lead LD2 may be nickel-plated copper.

Hereinafter, the secondary battery manufacturing device 100 for manufacturing the pouch-type secondary battery PC of FIGS. 1 and 2 will be described.

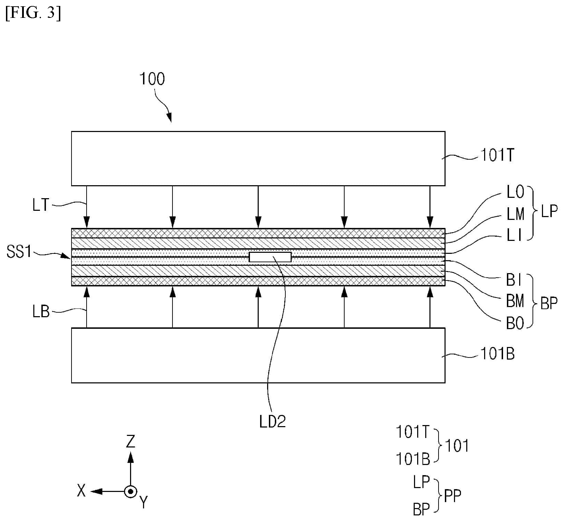

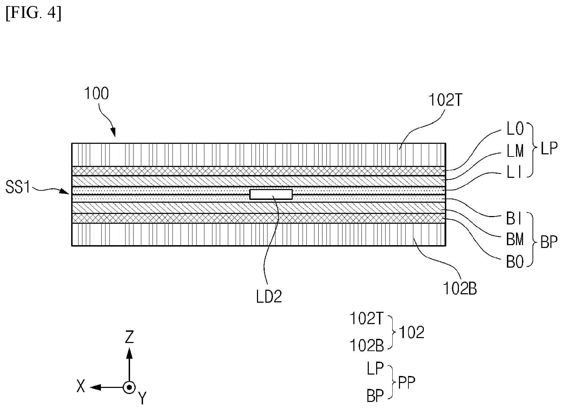

FIGS. 3 and 4 are diagrams showing processing by the secondary battery manufacturing device 100 according to exemplary embodiments.

Referring to FIGS. 1 to 4 together, the secondary battery manufacturing device 100 may include a laser beam unit 101 and a press unit 102. The laser beam unit 101 and the press unit 102 may be components for sealing the sealing part SS1 of the pouch-type secondary battery PC.

The laser beam unit 101 may be configured to irradiate a laser beam to the sealing part SS1. The laser beam unit 101 may include an upper laser beam device 101T and a lower laser beam device 101B. The lower laser beam device 101B may be configured to irradiate a laser beam LB to the bottom pouch BP. The laser beam LB may be incident on the metal layer BM through the protective layer BO. The upper laser beam device 101T may be configured to irradiate a laser beam LT to the lid pouch LP. The laser beam LT may be incident on the metal layer LM through the protective layer LO.

The laser beam unit 101 may be configured to evenly distribute the laser beam to the sealing part SS1. According to exemplary embodiments, each of the lower laser beam device 101B and the upper laser beam device 101T may include a laser source, a scanner, and an aperture. The laser source may be configured to generate a laser beam. The scanner may be configured to control the path of the laser beam. The scanner may include a motor and a mirror. The mirror of the scanner may be configured to change the path of the laser beam or reflect the laser beam in various directions. According to exemplary embodiments, the scanner may include a mirror extending along the extension direction (Y direction) of the first sealing part SS1. The aperture may be configured such that the laser beam is uniformly distributed to the sealing part SS1. According to exemplary embodiments, the aperture may have a slit shape extending along the extension direction (Y direction) of the first sealing part SS1.

The laser beam LB may have a wavelength range that can selectively heat the metal layer BM. The absorption rate of the laser beam LB by the metal layer BM may be higher than the absorption rate of the laser beam LB by the protective layer BO. By the metal layer BM of the bottom pouch BP heated by the lower laser beam device 101B, the sealant layer BI on the metal layer BM can be melted.

The laser beam LT may have a wavelength range that can selectively heat the metal layer LM. The absorption rate of the laser beam LT by the metal layer LM may be higher than the absorption rate of the laser beam LT by the protective layer LO. By the metal layer LM of the lid pouch LP heated by the upper laser beam device 101T, the sealant layer LI on the metal layer LM can be melted. The melted sealant layers BI, LI of the sealing part SS1 can form a seal.

According to exemplary embodiments, the metal layers BM, LM may each include aluminum. Aluminum shows a relatively high laser beam absorption rate when irradiated with a laser beam in a wavelength range of about 0.01 µm to about 0.1 µm, or a wavelength range of about 0.8 µm to about 1.0 µm. Each of the lower laser beam device 101B and the upper laser beam device 101T may be configured to irradiate a laser beam in a wavelength range of about 0.01 µm to about 0.1 µm, or a wavelength range of about 0.8 µm to about 1.0 µm. When irradiating laser in the wavelength range described above, the metal layers BM, LM can be selectively heated to melt the sealant layers BI, LI. That is, since the step of heating the protective layers BO, LO with low thermal conductivity and conducting heat to the metal layers BM, LM and sealant layers BI, LI is omitted, the speed of the packaging process for secondary batteries can be improved.

According to exemplary embodiments, the laser beam unit 101 may be configured to irradiate laser to the first sealing part SS1 for a time of about 0.5 seconds to about 1 second. During the laser irradiation of the laser beam unit 101, the sealant layers BI, LI can be melted by the heated metal layers BM, LM.

In contrast, when heat is applied to the sealing part SS1 with a heater, the thermal energy from the heater is conducted in the order of protective layers BO, LO, metal layers BM, LM, and sealant layers BI, LI, so it may take a longer time (for example, 2 seconds or more) to melt the sealant layers LI, BI. In addition, the electrode leads LD1, LD2, which have greater thermal conductivity than the sealant layers LI, BI, absorb heat, hindering heat conduction to the sealant layers BI, LI and causing non-uniform heat distribution within the sealing part SS1. This can cause problems of uneven sealing quality.

The laser beam unit 101 according to exemplary embodiments of the present disclosure selectively heats the metal layers BM, LM, thereby preventing a rapid temperature rise of the electrode leads LD1, LD2. The absorption rate of the laser beams LT, LB by the electrode leads LD1, LD2 may be smaller than the absorption rate of the laser beams LT, LB by the metal layers BM, LM. Accordingly, non-uniform heat distribution within the sealing part SS1 can be prevented.

The laser beam unit 101 may be configured to heat each of the metal layers BM, LM to a predetermined temperature. The predetermined temperature may be equal to or higher than the melting temperature of the sealant layer BI and equal to or higher than the melting temperature of the sealant layer LI. According to exemplary embodiments, the predetermined temperature may be about 120°C or higher. According to exemplary embodiments, the predetermined temperature may be about 130°C or higher. According to exemplary embodiments, the predetermined temperature may be about 140°C or higher. According to exemplary embodiments, the predetermined temperature may be about 190°C or lower. According to exemplary embodiments, the predetermined temperature may be about 180°C or lower. According to exemplary embodiments, the predetermined temperature may be about 170°C or lower.

The lower laser beam device 101B may be configured to heat the metal layer BM of the bottom pouch BP to a temperature equal to or higher than the melting temperature of the sealant layer BI. The upper laser beam device 101T may be configured to heat the metal layer LM of the lid pouch LP to a temperature equal to or higher than the melting temperature of the sealant layer LI.

The press unit 102 may be configured to process the pouch-type secondary battery PC processed by the laser beam unit 101. The press unit 102 may be configured to apply pressure to the sealing part SS1. The laser beam unit 101 and the press unit 102 may be configured to perform operations on the pouch-type secondary battery PC sequentially. According to exemplary embodiments, the laser beam unit 101 and the press unit 102 may be integrated by one module. According to exemplary embodiments, after the laser beam unit 101 completes irradiation of the laser beam to the sealing part SS1, the press operation of the sealing part SS1 by the press unit 102 may proceed at the same location.

The press unit 102 may include an upper press device 102T and a lower press device 102B. The upper press device 102T may be disposed to face the lid pouch LP. The lower press device 102B may be disposed to face the bottom pouch BP. Each of the upper press device 102T and the lower press device 102B may overlap with the sealing part SS1 in the Z direction.

The press unit 102 may seal the sealant layers BI, LI by applying pressure to the bonded sealant layers BI, LI at the sealing part SS1. Since the sealant layers BI, LI are uniformly melted by the laser beam unit 101, sealing in the press unit 102 becomes easier and sealing quality can be improved.

### (Second embodiment)

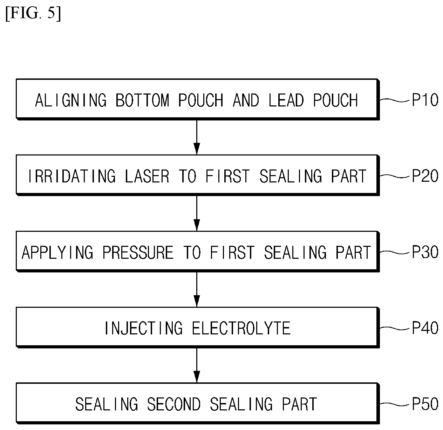

FIG. 5 is a flowchart showing a method for manufacturing a pouch-type secondary battery PC according to exemplary embodiments.

Referring to FIGS. 1 to 5 together, at P10, the electrode assembly EA is stored in the storing part of the pouch PP, and the bottom pouch BP and the lid pouch LP can be aligned. The bottom pouch BP and the lid pouch LP may be aligned such that their respective sealant layers BI, LI face each other.

At P20, laser beams LT, LB can be irradiated to the sealing part SS1 of the pouch PP. The step P20 of irradiating laser beams LT, LB to the sealing part SS1 may be performed by the laser beam unit 101. The laser beams LT, LB irradiated to the sealing part SS1 can selectively heat only the metal layers BM, LM of the sealing part SS1. For example, when the metal layers BM, LM of the pouch PP are aluminum, the wavelength of the laser beams LT, LB irradiated to the sealing part SS1 may be about 0.01 µm or more and about 0.1 µm or less, or about 0.8 µm or more and about 1.0 µm or less. In the wavelength range described above, the laser beam absorption rate of the metal layers BM, LM is greater than the laser beam absorption rate of the protective layers BO, LO. Therefore, the metal layers BM, LM can be selectively heated without the need to heat the protective layers BO, LO with low thermal conductivity. The heated metal layers BM, LM can melt the sealant layers BI, LI.
The step P20 of irradiating laser beams LT, LB to the sealing part SS1 may be performed until each of the temperature of the metal layer BM of the bottom pouch BP and the temperature of the metal layer LM of the lid pouch LP at the sealing part SS1 reaches a predetermined temperature. According to exemplary embodiments, the predetermined temperature may be equal to or higher than the melting temperature of the sealant layer BI of the bottom pouch BP and equal to or higher than the melting temperature of the sealant layer LI of the lid pouch LP. According to exemplary embodiments, the predetermined temperature may be about 120°C or more and about 190°C or less. According to exemplary embodiments, the step P20 of irradiating laser beams LT, LB to the sealing part SS1 may be performed for a time period of about 0.5 seconds to about 1 second.

At P30, the sealing part SS1 of the pouch PP can be pressed. The step P30 of pressing the sealing part SS1 may be performed by the press unit 102. The sealant layers BI, LI of the sealing part SS1 melted at step P20 can be sealed at the pressing step of P30.

At P40, electrolyte can be injected into the accommodation space for the electrode assembly EA of the pouch PP. The electrolyte can enable the movement of lithium ions. The electrolyte may include lithium salt and an organic solvent. According to exemplary embodiments, the lithium salt may include any one of lithium hexafluorophosphate (LiPF₆), lithium tetrafluoroborate (LiBF₄), and lithium perchlorate (LiClO₄). According to exemplary embodiments, the organic solvent may include any one of ethylene carbonate (EC), dimethyl carbonate (DMC), ethyl methyl carbonate (EMC), propylene carbonate (PC), and diethyl carbonate (DEC).

At P50, the second sealing part SS2 of the pouch PP can be sealed. For sealing the second sealing part SS2, the laser sealing method described in P30 above may be applied, or a sealing method by heat fusion using a heater may be applied.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A secondary battery manufacturing method comprising following steps:
aligning a bottom pouch and a lid pouch, wherein each of the bottom pouch and the lid pouch comprises a sealant layer, a protective layer, and a metal layer between the sealant layer and the protective layer, and the sealant layer of the bottom pouch is aligned to face the sealant layer of the lid pouch; and
irradiating a laser beam to a first sealing part of the bottom pouch and the lid pouch, wherein
a wavelength of the laser beam is in a range of 0.01 µm to 0.1 µm, or in a range of 0.8 µm to 1.0 µm.

2. The secondary battery manufacturing method of claim 1, wherein
an absorption rate of the laser beam by the metal layer of the bottom pouch is higher than an absorption rate of the laser beam by the protective layer of the bottom pouch, and
an absorption rate of the laser beam by the metal layer of the lid pouch is higher than an absorption rate of the laser beam by the protective layer of the lid pouch.

3. The secondary battery manufacturing method of claim 1, wherein
in the step of irradiating the laser beam to the first sealing part, the sealant layer of the bottom pouch and the sealant layer of the lid pouch are each melted.

4. The secondary battery manufacturing method of claim 1, wherein
in the step of irradiating the laser beam to the first sealing part, the metal layer of the bottom pouch is heated to a temperature equal to or higher than a melting temperature of the sealant layer of the bottom pouch, and the metal layer of the lid pouch is heated to a temperature equal to or higher than a melting temperature of the sealant layer of the lid pouch.

5. The secondary battery manufacturing method of claim 1, wherein
each of the metal layer of the bottom pouch and the metal layer of the lid pouch comprises aluminum, and
each of the sealant layer of the bottom pouch and the sealant layer of the lid pouch comprises polypropylene.

6. The secondary battery manufacturing method of claim 1, wherein
the step of irradiating the laser beam to the first sealing part is performed for a time period of 0.5 seconds or more and 1 second or less.

7. The secondary battery manufacturing method of claim 1, further comprising:
after the step of irradiating the laser beam to the first sealing part, applying pressure to the first sealing part.

8. The secondary battery manufacturing method of claim 7, further comprising:
after the step of applying pressure to the first sealing part,
injecting electrolyte into an accommodation space for an electrode assembly between the bottom pouch and the lid pouch; and
sealing a second sealing part of the bottom pouch and the lid pouch.

9. The secondary battery manufacturing method of claim 8, wherein
the first sealing part overlaps with electrode leads of the electrode assembly, and
the second sealing part does not overlap with the electrode leads of the electrode assembly.

10. The secondary battery manufacturing method of claim 1, wherein
a melting temperature of the protective layer of the bottom pouch is higher than a melting temperature of the sealant layer of the bottom pouch, and
a melting temperature of the protective layer of the lid pouch is higher than a melting temperature of the sealant layer of the lid pouch.

11. A secondary battery manufacturing device comprising:
a laser beam unit configured to irradiate a laser beam to a sealing part in which a first metal layer, a first sealant layer, a second sealant layer, and a second metal layer are sequentially stacked; and
a press unit configured to apply pressure to the sealing part, wherein
a wavelength of the laser beam is in a range of 0.01 µm to 0.1 µm, or in a range of 0.8 µm to 1.0 µm.

12. The secondary battery manufacturing device of claim 11, wherein
the laser beam unit is configured to irradiate laser beam to the sealing part for a time period of 0.5 seconds or more and 1 second or less.

13. The secondary battery manufacturing device of claim 11, wherein
each of the first metal layer and the second metal layer comprises aluminum.

14. The secondary battery manufacturing device of claim 11, wherein
an absorption rate of the laser beam by the first metal layer is greater than an absorption rate of the laser beam by the first sealant layer, and
an absorption rate of the laser beam by the second metal layer is greater than an absorption rate of the laser beam by the second sealant layer.
